# EUROPÄISCHE PATENTANMELDUNG

(11) **EP 3 082 094 A1**
(43) Veröffentlichungstag der Anmeldung: **19.10.2016**
(21) Anmeldenummer: 16160224.8
(22) Anmeldetag: 14.03.2016
(51) Int. Cl.: G06Q 30/06

(54) **SYSTEM ZUM ERSTELLEN EINER KUNDENSPEZIFISCHEN MESSVORRICHTUNG**

(30) Priorität: 14.04.2015 DE 102015105684
(71) Anmelder: SICK AG, 79183 Waldkirch (DE)
(72) Erfinder: Heidepriem, Sebastian, 79297 Winden (DE); Schaber, Volker, 77933 Lahr (DE); Kuri, Andreas, 79102 Freiburg (DE); Rieser, Martin, 79183 Waldkirch (DE)

(57) **Zusammenfassung**

Um eine einfache und schnelle Bestellung einer kundenspezifischen Messvorrichtung zu ermöglichen, ist ein System zum Erstellen einer kundenspezifischen Messvorrichtung vorgesehen, umfassend eine Datenbank, in der Hersteller-Parameterdaten der Messvorrichtung abgespeichert sind, einen ersten, auf die Datenbank zugreifenden Terminal, mit dem eine Zusammenstellung der Messvorrichtung aus den Hersteller-Parameterdaten zusammen mit kundenspezifischen Parameterdaten erstellbar ist und die Zusammenstellung zusammen mit einem Konfiguration-Identifizierungscode zu einem kombinierten Datensatz kombinierbar ist, und einen zweiten, auf die Datenbank zugreifenden Terminal, an dem der kombinierte Datensatz mit dem Konfiguration-Identifizierungscode kommunizierbar ist , wobei der kombinierte Datensatz in der Datenbank derart speicherbar ist, dass der kombinierte Datensatz vom ersten oder zweiten Terminal unter dem Konfiguration-Identifizierungscode zum erneuten Herstellen der Messvorrichtung abrufbar ist.

## Beschreibung

Die Erfindung betrifft ein System zum Erstellen einer kundenspezifischen Messvorrichtung gemäß dem Anspruch 1.

Herkömmlich kann in der Automatisierungsindustrie ein Kunde über ein Portal eines Herstellers eine Messvorrichtung für eine Automatisierungsanlage des Kunden bestellen, indem der Kunde anhand von Hersteller-Parameterdaten die bestmögliche Messvorrichtung für seine Automatisierungsanlage zusammenstellt.

Hierbei umfassen die Hersteller-Parameterdaten Softwaredaten und Hardwaredaten bzw. Software- und Hardwarekonfigurationen der Messvorrichtung.

Im Falle eines Änderungswunsches von Seiten des Kunden bzgl. der Messvorrichtung werden auf Herstellerseite die Hersteller-Parameterdaten angepasst und die entsprechenden Messvorrichtungen dem Kunden zur Verfügung gestellt. Der Änderungswunsch kann in einer Variante der Softwaredaten und/oder der Hardwaredaten bestehen, die eine kundenseitige Anwendungsanforderung an die veränderte Messvorrichtung erfüllt.

Solch eine herkömmliche Erstellung der Messvorrichtung ist für den Kunden zeitaufwendig, da er sämtliche Hersteller-Parameterdaten immer wieder auswählen und insbesondere seine Änderungswünsche mitteilen muss.

Es ist daher eine Aufgabe der Erfindung, ein System zum Erstellen einer kundenspezifischen Messvorrichtung zur Verfügung zu stellen, das einem Kunden eine einfache und schnelle Bestellung der kundenspezifischen Messvorrichtung ermöglicht.

Die Aufgabe wird erfindungsgemäß gelöst durch ein System zum Erstellen einer kundenspezifischen Messvorrichtung, umfassend eine Datenbank, in der Hersteller-Parameterdaten der Messvorrichtung abgespeichert sind, einen ersten, auf die Datenbank zugreifenden Terminal, mit dem eine Zusammenstellung der Messvorrichtung aus den Hersteller-Parameterdaten zusammen mit kundenspezifischen Parameterdaten erstellbar ist und die Zusammenstellung zusammen mit einem Konfiguration-Identifizierungscode zu einem kombinierten Datensatz kombinierbar ist, und einen zweiten, auf die Datenbank zugreifenden Terminal, an dem der kombinierte Datensatz mit dem Konfiguration-Identifizierungscode kommunizierbar ist, wobei der kombinierte Datensatz in der Datenbank derart speicherbar ist, dass der kombinierte Datensatz vom ersten und/oder zweiten Terminal anhand des Konfiguration-Identifizierungscodes zum erneuten Herstellen der Messvorrichtung abrufbar ist.

Dies hat den Vorteil, dass lediglich der Konfiguration-Identifizierungscode ausgewählt und kommuniziert werden muss, um die Messvorrichtung mit dem kombinierten Datensatz gemäß der Kundenzusammenstellung zu erhalten.

Gemäß einem bevorzugten Ausführungsbeispiel ist die Messvorrichtung eine Teilkomponente einer Automatisierungsanlage, vorzugsweise ein Sensor oder eine Maschinensteuerung.

Gemäß einem weiteren bevorzugten Ausführungsbeispiel sind der erste und zweite Terminal jeweils Computer mit Zugriff auf eine Datenbank.

Gemäß einem weiteren bevorzugten Ausführungsbeispiel umfassen die kundenspezifischen Parameterdaten Anwendungsdaten und/oder Konfigurationsdaten des Kunden für die Messvorrichtung. Hierdurch kann der Kunde vorteilhafterweise spezielle Einstellungen, wie z.B. Umgebungstemperatur, Schaltzeitpunkt, oder dergleichen, der Messvorrichtung im Betrieb an seiner Automatisierungsanlage auf kurzem Weg an den Hersteller kommunizieren und eine entsprechende voreingestellte Messvorrichtung vom Hersteller liefern lassen.

Gemäß einem weiteren bevorzugten Ausführungsbeispiel umfassen die Hersteller-Parameterdaten einen Typ der Messvorrichtung in Form von Hardwaredaten.

Gemäß einem weiteren bevorzugten Ausführungsbeispiel umfassen die Hersteller-Parameterdaten Betriebsdaten der Messvorrichtung in Form von Softwaredaten. Hierbei beinhalten die Softwaredaten insbesondere Basis-Softwareversionen und/oder spezielle Softwareversionen.

Gemäß einem weiteren bevorzugten Ausführungsbeispiel ist der kombinierte Datensatz mit dem Konfiguration-Identifizierungscode auf einer herstellerseitigen Datenbank, einer kundenseitigen Datenbank und/oder einer Cloud-Datenbank speicherbar.

Gemäß einem weiteren bevorzugten Ausführungsbeispiel ist der Konfiguration-Identifizierungscode des kombinierten Datensatzes auf die Messvorrichtung aufgeklebt, aufgedruckt, aufgelasert oder dergleichen.

Das erfindungsgemäße System kann auf ähnliche Weise durch weitere Merkmale ausgestaltet werden und zeigt dabei ähnliche Vorteile. Derartige weitere Merkmale sind beispielhaft, aber nicht abschließend, in den sich an dem unabhängigen Anspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

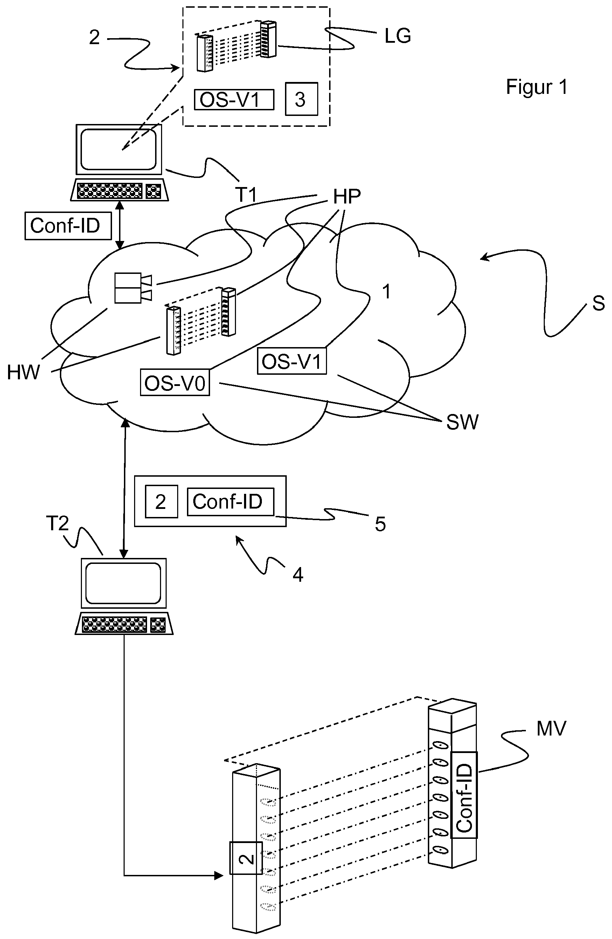

- Fig. 1: eine schematische Darstellung eines erfindungsgemäßen Systems.

In der Figur 1 ist ein schematischer Aufbau eines erfindungsgemäßen Systems S gezeigt, das zum Erstellen einer kundenspezifischen Messvorrichtung MV vorgesehen ist. Mittels des erfindungsgemäßen Systems S kann ein Kunde die Messvorrichtung MV als eine Teilkomponente für seine Automatisierungsanlage erstellen und beim Hersteller bestellen.

Hierzu umfasst das System S eine Datenbank 1, in der unterschiedliche Typen von Hardwaredaten HW der Messvorrichtungen MV und zugehörige Softwaredaten SW hinterlegt bzw. gespeichert sind. Die Hardwaredaten HW umfassen vorzugsweise Sensoren oder Maschinensteuerungen und sind in der Figur 1 beispielhaft in Form eines Lichtgitters LG bzw. einer Kamera dargestellt. Die Softwaredaten SW umfassen unterschiedliche Betriebssysteme bzw. Betriebsdaten zum Betreiben der Messvorrichtung und sind in der Figur 1 beispielhaft in Form von zwei unterschiedlichen Softwareversionen OS-V0 und OS-V1 dargestellt.

Die Hardwaredaten HW und Softwaredaten SW bilden Hersteller-Parameter HP der Messvorrichtung MV, die wiederum vom Hersteller zum Erstellen der Messvorrichtung MV genutzt werden.

Der Kunde kann mit einem ersten Terminal T1 auf die Datenbank 1 zugreifen und eine Zusammenstellung 2 der Messvorrichtung MV anhand der Hersteller-Parameter HP erstellen. Hierbei beinhaltet die Zusammenstellung 2 eine Auswahl an dem Typ der Messvorrichtung MV (das Lichtgitter LG in der Figur 1) und an der Softwareversion des Betriebssystems der Messvorrichtung MV (die Softwareversion OS-V1 in der Figur 1) aus den in der Datenbank 1 hinterlegten Hersteller-Parametern HP.

Zusätzlich kann der Kunde erfindungsgemäß kundenspezifische Parameterdaten 3 bzgl. der Messvorrichtung MV hinzufügen. Hierbei umfassen die kundenspezifischen Parameterdaten 3 vorzugsweise Anwendungsdaten und/oder Konfigurationsdaten des Kunden für die Messvorrichtung MV im Betrieb an seiner Automatisierungsanlage.

Im Sinne der Erfindung werden unter Anwendungsdaten und/oder Konfigurationsdaten Daten bzgl. spezieller Einstellungen der Messvorrichtung MV im Betrieb an der Automatisierungsanlage des Kunden verstanden, die der Kunde als Voreinstellung der Messvorrichtung MV wünscht. Die Daten können beispielweise Umgebungsdaten, wie Temperatur oder Arbeitsbereich, des Lichtgitters LG im Betrieb oder Betriebsdaten, wie Schaltzeiten oder Reaktionsverhalten, der Maschinensteuerung im Betrieb sein. Hierbei umfasst die Maschinensteuerung sowohl eine nichtsichere Steuerung als auch eine Sicherheitssteuerung.

Die kundenspezifischen Parameterdaten 3 können beispielweise auch Daten einer bereits im Betrieb des Kunden befindlichen Messvorrichtung MV mit sämtlichen speziellen Einstellungen sein, so dass die neu erstellte Messvorrichtung MV durch das erfindungsgemäße System S ein Duplikat der bereits im Betrieb befindlichen Messvorrichtung MV darstellt und als Austausch der im Betrieb befindlichen Messvorrichtung MV dienen kann. Hierdurch erhält der Kunde den zusätzlichen Vorteil, dass er die neu belieferte Messvorrichtung MV nicht zusätzlich einstellen muss, da sie durch das erfindungsgemäße System S bereits vom Hersteller komplett voreingestellt geliefert wird.

D.h. konkret anhand des in der Figur 1 gezeigten Ausführungsbeispiels wählt der Kunde das Lichtgitter LG und das Betriebssystem mit der Softwareversion OS-V1 aus der Datenbank 1 als Hersteller-Parameter HP und fügt seine vorhandene, für seine Anwendung notwendige spezielle Einstellungen als kundenspezifische Parameterdaten 3 hinzu. Diese Auswahl stellt die kundenspezifische Zusammenstellung 2 dar.

Hieraus ist mit dem ersten Terminal T1 die Zusammenstellung 2 erfindungsgemäß zusammen mit einem Konfiguration-Identifizierungscode 5 zu einem kombinierten Datensatz 4 kombinierbar, so dass die erstellte Zusammenstellung 2 mit dem Konfiguration-Identifizierungscode 5 eindeutig zu der vom Kunden gewünschten Messvorrichtung MV zugeordnet werden kann.

Die Zusammenstellung 2 beinhaltet somit eine Auswahl an Hersteller-Parameterdaten HP und kundenspezifische Parameterdaten 3 und ist an einem zweiten Terminal T2 kommunizierbar, wobei der zweite Terminal T2 ebenfalls auf die Datenbank 1 zugreifen kann.

Der kombinierte Datensatz 4 umfasst somit die vom Kunden ausgewählten Hersteller-Parameterdaten HP mit Hardware- HW und Softwaredaten SW, die zusätzlichen kundenspezifischen Parameterdaten 3 und den Konfiguration-Identifizierungscode 5.

Der Konfiguration-Identifizierungscode 5 beinhaltet die Information betreffend der vom Kunden ausgewählten Hersteller-Parameterdaten HP, der kundenspezifischen Parameterdaten 3 und der Identität des Kunden, so dass die Zusammenstellung 2 wiederum in Verbindung mit dem Kunden und der Bestellung eindeutig zugeordnet ist.

Der kombinierte Datensatz 4 ist in der Datenbank 1 unter dem Konfiguration-Identifizierungscode 5 abgespeichert, so dass sowohl der erste Terminal T1 als auch der zweite Terminal T2 auf den kombinierten Datensatz 4 zugreifen können. Hierbei wird nur ein Abrufen des Konfiguration-Identifizierungscodes 5 benötigt, so dass die vom Kunden zusammengestellte Messvorrichtung MV erneut bestellt bzw. hergestellt werden kann.

Der erste und zweite Terminal T1 und T2 stellen hierbei jeweils einen Computer mit Zugriff auf die Datenbank 1 dar, mit dem der Konfiguration-Identifizierungscode 5 abrufbar ist.

Vorzugsweise ist der kombinierte Datensatz 4 auf einer herstellerseitigen Datenbank, einer kundenseitigen Datenbank und/oder einer Cloud-Datenbank abgespeichert, so dass abhängig von der Form der Datenbank eine entsprechende Sicherheitsanforderung zu erfüllen ist.

Ferner ist vorzugsweise der Konfiguration-Identifizierungscode 5 des kombinierten Datensatzes 4 auf die Messvorrichtung MV aufgeklebt, aufgedruckt, aufgelasert oder dergleichen, so dass der Kunde schnell und einfach sämtliche Information zum Bestellen einer identischen Messvorrichtung MV aus der ihm vorliegenden Messvorrichtung MV erhalten kann.

### Bezugszeichenliste

- 1: Datenbank
- 2: Zusammenstellung
- 3: Kundenspezifische Parameterdaten
- 4: Kombinierter Datensatz
- 5: Konfiguration-Identifizierungscode
- HP: Hersteller-Parameterdaten
- HW: Hardwaredaten
- LG: Lichtgitter
- MV: Messvorrichtung
- OS-V0, OS-V1: Softwareversionen
- SW: Softwaredaten
- T1, T2: Erster und zweiter Terminal

## Patentansprüche

1. System (S) zum Erstellen einer kundenspezifischen Messvorrichtung (MV), umfassend:
eine Datenbank (1), in der Hersteller-Parameterdaten (HP) der Messvorrichtung (MV) abgespeichert sind,
einen ersten, auf die Datenbank (1) zugreifenden Terminal (T1), mit dem eine Zusammenstellung (2) der Messvorrichtung (MV) aus den Hersteller-Parameterdaten (HP) zusammen mit kundenspezifischen Parameterdaten (3) erstellbar ist und die Zusammenstellung (2) zusammen mit einem Konfiguration-Identifizierungscode (5) zu einem kombinierten Datensatz (4) kombinierbar ist, und
einen zweiten, auf die Datenbank (1) zugreifenden Terminal (T2), an dem der kombinierte Datensatz (4) mit dem Konfiguration-Identifizierungscode (5) kommunizierbar ist, wobei der kombinierte Datensatz (4) in der Datenbank (1) derart speicherbar ist, dass der kombinierte Datensatz (4) vom ersten oder zweiten Terminal (T1, T2) unter dem Konfiguration-Identifizierungscode (5) zum erneuten Herstellen der Messvorrichtung (MV) abrufbar ist.

2. System nach Anspruch 1, wobei die Messvorrichtung (MV) eine Teilkomponente einer Automatisierungsanlage, vorzugsweise ein Sensor oder eine Maschinensteuerung, ist.

3. System nach Anspruch 1 oder 2, wobei der erste und zweite Terminal (T1, T2) jeweils Computer mit Zugriff auf die Datenbank (1) sind.

4. System nach einem der vorhergehenden Ansprüche, wobei die kundenspezifischen Parameterdaten (3) Anwendungsdaten und/oder Konfigurationsdaten des Kunden für die Messvorrichtung (MV) umfassen.

5. System nach einem der vorhergehenden Ansprüche, wobei die Hersteller-Parameterdaten (HP) einen Typ der Messvorrichtung (MV) in Form von Hardwaredaten (HW) umfassen.

6. System nach einem der vorhergehenden Ansprüche, wobei die Hersteller-Parameterdaten (HP) Betriebsdaten der Messvorrichtung (MV) in Form von Softwaredaten (SW) umfassen.

7. System nach Anspruch 6, wobei die Softwaredaten (SW) Basis-Softwareversionen (OS-V0) und/oder spezielle Softwareversionen (OS-V1) beinhalten.

8. System nach einem der vorhergehenden Ansprüche, wobei der kombinierte Datensatz (4) mit dem Konfiguration-Identifizierungscode (5) auf einer herstellerseitigen Datenbank, einer kundenseitigen Datenbank und/oder einer Cloud-Datenbank speicherbar ist.

9. System nach einem der vorhergehenden Ansprüche, wobei der Konfiguration-Identifizierungscode (5) des kombinierten Datensatzes (4) auf die Messvorrichtung (MV) aufgeklebt, aufgedruckt, aufgelasert oder dergleichen ist.
